# EUROPÄISCHE PATENTSCHRIFT

(11) **EP 0 536 599 B1**
(45) Veröffentlichungstag und Bekanntmachung des Hinweises auf die Patenterteilung: **06.12.1995**
(21) Anmeldenummer: 92116341.6
(22) Anmeldetag: 24.09.1992
(51) Int. Cl.: H02G 11/00, H01R 35/02, B60R 16/02

(54) **Vorrichtung zur Stromübertragung zwischen zwei Endstellen**
Device for current transmission between two end positions
Dispositif de transmission de courant entre deux positions extrêmes

(30) Priorität: 07.10.1991 DE 4133172
(43) Veröffentlichungstag der Anmeldung: 14.04.1993
(73) Patentinhaber: kabelmetal electro GmbH, 30002 Hannover (DE)
(72) Erfinder: Schauer, Friedrich, Dipl.-Ing., W-8501 Heroldsberg (DE); Neuner, Andreas, W-8500 Nürnberg (DE)

(56) Entgegenhaltungen:
- EP-A- 0 425 846
- DE-U- 8 914 423
- GB-A- 2 071 926

## Beschreibung

Die Erfindung betrifft eine Vorrichtung zur Stromübertragung zwischen zwei Endstellen, zwischen denen eine der elektrischen Verbindung dienende, in Windungen verlaufende und in einer Kassette untergebrachte Flachband-Leitung mit mindestens zwei elektrischen Leitern angeordnet ist, deren Länge wesentlich größer als der Abstand der beiden Endstellen voneinander ist, bei welcher mindestens eine der beiden Endstellen relativ zu der anderen bewegbar ist, bei welcher an die abisolierten Leiter der Flachband-Leitung mindestens an einem Ende derselben Steckerstifte elektrisch leitend angeschlossen sind, die in einem vorgefertigten Gehäuse aus Isoliermaterial angeordnet sind, das an seinem einen Ende eine Öffnung zur Aufnahme von Gegenkontakten aufweist, bei welcher das Gehäuse aus einem Grundkörper und einem Deckel besteht, die in der Schließstellung des Gehäuses miteinander verriegelt sind und bei welcher die Flachband-Leitung durch eine zwischen Grundkörper und Deckel verbleibende Trennfuge hindurchgeführt und in der Schließstellung des Gehäuses in derselben eingeklemmt ist (DE-U-8 914 423).

Geräte mit derartigen Vorrichtungen sind beispielsweise Aufroller, in denen eine elektrische Leitung auf einer Spule aufgewickelt ist. Die Leitung kann aus dem Gehäuse des Gerätes herausgezogen und unter der Wirkung einer Feder nach Fortfall der Zugkraft automatisch wieder aufgerollt werden. Bei dem Gerät kann es sich auch um die Stromzuführung für einen Prallschutz für Kraftfahrzeuge handeln, bei dem eine elektrische Leitung im Lenkrad eines Kraftfahrzeugs untergebracht ist. Ein wesentliches Problem bei diesen Geräten ist die Stromübertragung zwischen feststehenden und beweglichen Teilen. Dieses Problem tritt bei allen Geräten auf, bei denen zwei relativ zueinander bewegbare Endstellen vorhanden sind, von denen in den meisten Fällen eine als Festpunkt ausgebildet ist. Die für solche Fälle seit langem bekannten Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach dem eingangs erwähnten DE-U-8 914 423 erfolgt die Stromübertragung durch die beispielsweise nach Art eines Federhauses gewickelte Flachband-Leitung. Bei einer relativen Drehbewegung der beiden durch die Flachband-Leitung - im folgenden kurz als "FBL" bezeichnet - verbundenen Endstellen, "atmet" die aufgewickelte FBL wie die Feder einer Uhr. Die Windungen werden in der einen Drehrichtung auf einen kleineren Durchmesser zusammengezogen. Sie gehen in der anderen Drehrichtung wieder auf einen größeren Durchmesser auf. Durch die Anbringung von Steckerstiften an mindestens einem Ende der FBL können mit entsprechenden Gegenkontakten ausgerüstete weiterführende Leitungen leicht angeschlossen werden. Die Steckerstifte und das Ende der FBL sind in einem aus zwei Teilen bestehenden Gehäuse untergebracht. Dabei sind Teile der Steckerstifte in Ausnehmungen eines Grundkörpers des Gehäuses eingerastet. Die FBL ist zwischen dem Grundkörper und einem Klemmteil des Gehäuses eingeklemmt.

Aus der GB-A-2 071 926 ist ein Gehäuse für einen elektrischen Stecker bekannt, in dem Elemente zur Festlegung von elektrischen Kontakten angebracht sind. Das Gehäuse weist dazu zwei über Filmscharniere mit demselben verbundene Deckel auf, an denen jeweils ein Vorsprung angebracht ist. Im geschlossenen Gehäuse liegen die Vorsprünge an zwei als Steckerstifte ausgebildeten Kontakten an, die dadurch in ihrer Position gesichert sind.

Der Erfindung liegt die Aufgabe zugrunde, die eingangs geschilderte Vorrichtung so weiterzubilden, daß die Verbindungsstellen zwischen den Leitern der FBL und den Steckerstiften bei einfacher Bestückung des Gehäuses wirksam gegen in axialer Richtung wirkende mechanische Kräfte geschützt sind.

Diese Aufgabe wird gemäß der Erfindung dadurch gelöst,
- daß an dem Deckel Vorsprünge angebracht sind, die zur Fixierung der Position der Steckerstifte in der Schließstellung des Gehäuses fest an denselben anliegen und
- daß in dem Gehäuse Durchbrechungen angebracht sind, durch welche die Verbindungsstellen zwischen den Leitern der Flachband-Leitung und den Steckerstiften zugänglich sind.

In dem Gehäuse dieser Vorrichtung sind die Steckerstifte in beiden axialen Richtungen gegen auf sie bzw. die angeschlossene FBL einwirkende Zug- oder Druckkräfte geschützt. Das wird einerseits durch die Vorsprünge des Deckels und andererseits durch das Verklemmen der FBL im Gehäuse erreicht. Dabei werden die Steckerstifte zunächst nur in das Gehäuse eingelegt und die FBL wird in die für die Verbindung erforderliche Position gebracht. Nach dem Verschließen des Gehäuses werden die Leiter der FBL mit den Steckerstiften elektrisch leitend verbunden, was durch die Durchbrechungen des Gehäuses ermöglicht wird. Da Steckerstifte und FBL dabei zugentlastet im Gehäuse festgelegt sind, bleiben ihre Verbindungsstellen frei von in axialer Richtung wirkenden Kräften. Die Vorsprünge des Deckels liegen in der Schließstellung des Gehäuses fest an den Steckerstiften an.

Sie schützen dieselben dadurch auf Dauer beispielsweise gegen Verschiebungen im Gehäuse, die beim Aufstecken und Abziehen von Gegenkontakten auftreten könnten. Da die FBL in der Trennfuge zwischen Grundkörper und Deckel in der Schließstellung des Gehäuses fest eingeklemmt ist, können auf die FBL einwirkende Zugbelastungen nicht auf die Verbindungsstellen zwischen den Leitern der FBL und den Steckerstiften übertragen werden. Die Steckerstifte sind damit auch auf dieser Seite auf Dauer wirksam zugentlastet.

Vorteilhafte Ausgestaltungen der Erfindung gehen aus den Unteransprüchen hervor.

Ausführungsbeispiele des Erfindungsgegenstandes sind in den Zeichnungen dargestellt.

Es zeigen:

Fig. 1 schematisch einen Querschnitt durch eine Kassette mit einer Vorrichtung nach der Erfindung.

Fig. 2 das Ende einer FBL mit angeschlossenen Steckerstiften in vergrößerter Darstellung.

Fig. 3 eine Ansicht einer verschlossenen Kassette.

Fig. 4 einen Querschnitt durch einen in der Vorrichtung eingesetzten Steckanschluß in vergrößerter Darstellung.

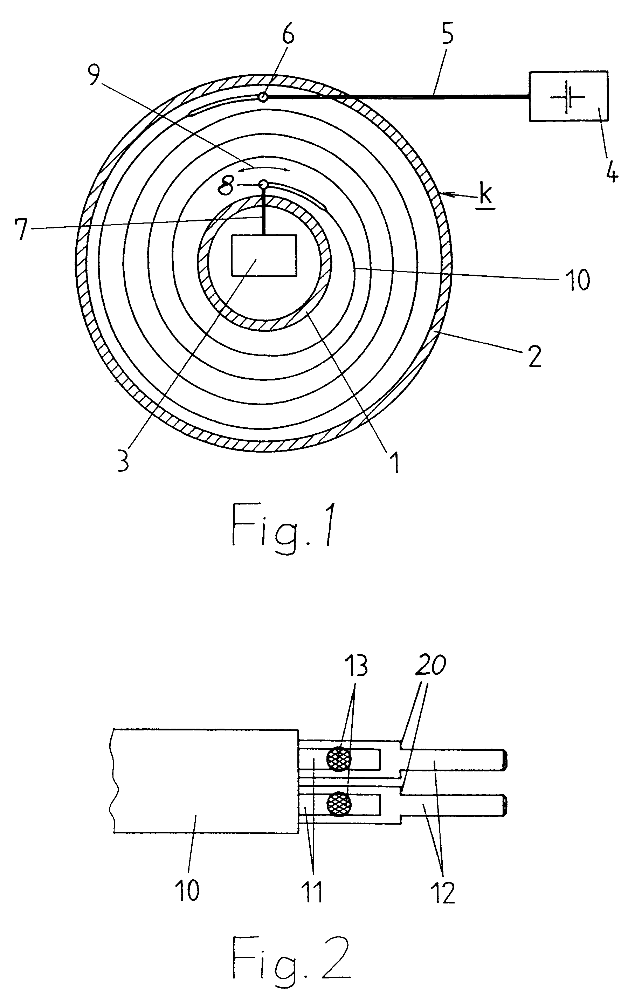

In Fig. 1 sind schematisch zwei beispielsweise kreisförmig ausgebildete Wände 1 und 2 einer Kassette K eines elektrischen Geräts dargestellt. Dieses Gerät kann beispielsweise ein in das Lenkrad eines Kraftfahrzeugs eingebautes Steuergerät sein. Zur Stromversorgung einer Elektronik 3 dieses Geräts ist dasselbe an die Batterie 4 des Kraftfahrzeugs angeschlossen. Die Batterie 4 ist über eine elektrische Leitung 5 mit einer als Festpunkt ausgeführten Endstelle 6 verbunden. Die Elektronik 3 ist über eine elektrische Leitung 7 an eine Endstelle 8 angeschlossen, die in Richtung des Doppelpfeiles 9 bewegbar ist.

Zwischen den beiden Endstellen 6 und 8 ist eine FBL 10 mit mindestens zwei Leitern 11 (Fig. 2) angebracht. Die Leiter 11 sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Sie hat in dem in Fig. 2 dargestellten Ausführungsbeispiel zwei flache Leiter 11, an die Steckerstifte 12 beispielsweise angelötet oder angeschweißt sind. Die Verbindungsstellen zwischen Leitern 11 und Steckerstiften 12 sind mit 13 bezeichnet.

Die FBL 10 kann gemäß Fig. 1 in der Kassette K zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickels verkleinert bzw. vergrößert.

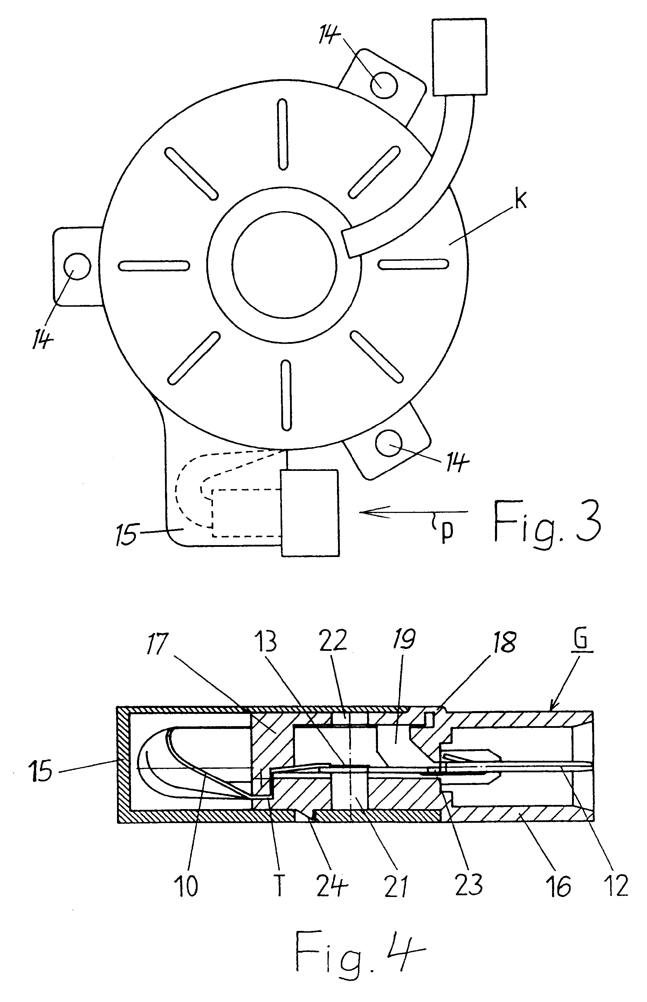

Fig. 2 zeigt das mit Steckerstiften 12 bestückte Ende der FBL 10. Die Verbindung von Leitern 11 und Steckerstiften 12 kann auf jede herkömmliche Art und Weise geschehen. Vorzugsweise werden die Leiter 11 und die Steckerstifte 12 an den Verbindungsstellen 13 aber durch Löten miteinander verbunden. Um das Ende der FBL 10 und die Steckerstifte 12 wird als Schutzkörper ein aus Fig. 4 ersichtliches Gehäuse G aus Isoliermaterial herum angeordnet, das anschließend mit der Kassette K verbunden wird.

Die Kassette K ist in Fig. 3 in geschlossener Form dargestellt. Sie kann über Befestigungspunkte 14 beispielsweise mit der Lenksäule eines Lenkrads eines Kraftfahrzeugs fest verbunden werden. An der Kassette K ist eine Aufnahme 15 angebracht, in welcher die innerhalb der Kassette K in Windungen verlaufende FBL 10 endet. In der Aufnahme 15 wird das Gehäuse G angebracht, wenn das Ende der FBL 10 und Steckerstifte 12 in demselben festgelegt sind. Eine Anschlußleitung kann dann in Richtung des Pfeiles P in die Aufnahme 15 eingesteckt werden.

Das aus Isoliermaterial bestehende Gehäuse G weist einen Grundkörper 16 und einen Deckel 17 auf, die an der Stelle 18 über ein Filmscharnier miteinander verbunden sein können.

Grundkörper 16 und Deckel 17 können aber auch getrennte Teile sein. Am Deckel 17 sind Vorsprünge 19 angebracht, die in der Schließstellung des Gehäuses G an den Steckerstiften 12 fest anliegen. Die Vorsprünge 19 schützen die Steckerstifte 12 gegen mechanische Kräfte, die beim Aufstecken von Gegenkontakten in axialer Richtung auf sie einwirken.

Andererseits sind die Steckerstifte 12 durch ihre aus Fig. 2 ersichtlichen Schultern 20 so im Grundkörper 16 festgelegt, daß sie auch gegen entgegen der Steckrichtung wirkende Kräfte geschützt sind. Zwischen dem Grundkörper 16 und dem Deckel 17 des Gehäuses G verbleibt bei der in Fig. 4 dargestellten Ausführungsform an der Schließstelle eine Trennfuge T, durch welche die FBL 10 hindurchgeführt ist. Die FBL 10 ist daher in der Schließstellung des Gehäuses G in der Trennfuge T eingeklemmt. Sie wird dabei entsprechend der Darstellung in Fig. 4 zweimal etwa rechtwinklig abgebogen. Die Verbindungsstellen 13 zwischen den Leitern 11 und den Steckerstiften 12 sind damit auch von der Seite der FBL 10 her wirksam zugentlastet.

Das Gehäuse G weist sowohl im Grundkörper 16 als auch im Deckel 17 Durchbrechungen 21 bzw. 22 auf, durch welche die Verbindungsstellen 13 zwischen den Leitern 11 der FBL 10 und den Steckerstiften 12 zugänglich sind. Die Durchbrechungen 21 und 22 werden dazu benutzt, die Verbindungsstellen 13 zwischen Leitern 11 und Steckerstiften 12 herzustellen und zu überprüfen.

Zur Bestückung des im Wege der Vorfertigung hergestellten Gehäuses G werden zunächst die Steckerstifte 12 in dasselbe eingelegt. Anschließend wird das Ende der FBL 10 in die für die Verbindung erforderliche Position gebracht. Das Gehäuse G wird dann mittels des Deckels 17 verschlossen, wobei die Vorsprünge 19 sich an die Steckerstifte 12 anlegen und die FBL 10 in der Trennfuge T eingeklemmt wird. Danach werden die Leiter 11 der FBL 10 mit den Steckerstiften 12 verlötet, was - wie bereits erwähnt - durch die Durchbrechungen 21 bzw. 22 ermöglicht wird. Da sowohl die Steckerstifte 12 als auch die FBL 10 vorher zugentlastet im Gehäuse G festgelegt sind, ist auf diese Weise sichergestellt, daß die Verbindungsstellen 13 frei von in axialer Richtung wirkenden Kräften bleiben. Das so fertiggestellte Gehäuse G kann dann in die Aufnahme 15 eingeschoben werden, in der es beispielsweise mittels einer Nase 24 federnd einrastend festgelegt ist.

## Patentansprüche

1. Vorrichtung zur Stromübertragung zwischen zwei Endstellen (6,8), zwischen denen eine der elektrischen Verbindung dienende, in Windungen verlaufende und in einer Kassette (K) untergebrachte Flachband-Leitung (10) mit mindestens zwei elektrischen Leitern (11) angeordnet ist, deren Länge wesentlich größer als der Abstand der beiden Endstellen (6,8) voneinander ist, bei welcher mindestens eine der beiden Endstellen (6,8) relativ zu der anderen bewegbar ist, bei welcher an die abisolierten Leiter (11) der Flachband-Leitung (10) mindestens an einem Ende derselben Steckerstifte (12) elektrisch leitend angeschlossen sind, die in einem vorgefertigten Gehäuse (G) aus Isoliermaterial angeordnet sind, das an seinem einen Ende eine Öffnung zur Aufnahme von Gegenkontakten aufweist, bei welcher das Gehäuse (G) aus einem Grundkörper (16) und einem Deckel (17) besteht, die in der Schließstellung des Gehäuses (G) miteinander verriegelt sind und bei welcher die Flachband-Leitung (10) durch eine zwischen Grundkörper (16) und Deckel (17) verbleibende Trennfuge (T) hindurchgeführt und in der Schließstellung des Gehäuses (G) in derselben eingeklemmt ist, dadurch gekennzeichnet,
- daß an dem Deckel (17) Vorsprünge (19) angebracht sind, die zur Fixierung der Position der Steckerstifte (12) in der Schließstellung des Gehäuses (G) fest an denselben anliegen und
- daß in dem Gehäuse (G) Durchbrechungen (21,22) angebracht sind, durch welche die Verbindungsstellen (13) zwischen den Leitern (11) der Flachband-Leitung (10) und den Steckerstiften (12) zugänglich sind.

2. Vorrichtung nach Anspruch 1, dadurch gekennzeichnet, daß Grundkörper (16) und Deckel (17) des Gehäuses (G) über ein Filmscharnier (18) miteinander verbunden sind.

3. Vorrichtung nach Anspruch 1 oder 2, dadurch gekennzeichnet, daß die Flachband-Leitung (10) in der Trennfuge (T) zwischen Grundkörper (16) und Deckel (17) des Gehäuses (G) mindestens zweimal gebogen verläuft.

4. Vorrichtung nach einem der Ansprüche 1 bis 3, dadurch gekennzeichnet, daß die Steckerstifte (12) Ansätze (23) aufweisen, an denen die Vorsprünge (19) des Deckels (17) anliegen.

5. Vorrichtung nach einem der Ansprüche 1 bis 4, dadurch gekennzeichnet, daß das Gehäuse (G) in einer fest mit der Kassette (K) verbundenen Aufnahme (15) angeordnet ist.

6. Vorrichtung nach einem der Ansprüche 1 bis 5, dadurch gekennzeichnet, daß das Gehäuse (G) federnd in der Aufnahme (15) eingerastet ist.

## Claims

1. Device for transmitting current between two end points (6, 8) between which a ribbon cable (10) which serves for electrical connection, runs in turns, is accommodated in a cassette (K) and has at least two electrical conductors (11) is arranged, the length of which conductors (11) is substantially greater than the distance between the two end points (6, 8), in which device at least one of the two end points (6, 8) can be moved in relation to the other, in which device plug pins (12) are connected in an electrically conductive manner to the bared conductors (11) of the ribbon cable (10), at least at one of its ends, which plug pins are arranged in a prefabricated housing (G) made of insulating material which has at one of its ends an opening for receiving mating contacts, in which device the housing (G) consists of a base body (16) and a lid (17) which are locked to one another in the closed position of the housing (G) and in which device the ribbon cable (10) is guided through a separation joint (T) remaining between the base body (16) and lid (17) and is clamped in the said separation joint (T) in the closed position of the housing (G), characterized
- in that projections (19) which rest securely on the plug pins (12) in order to fix their position in the closed position of the housing (G) are provided on the lid (17), and
- in that through-holes (21, 22) through which the connection points (13) between the conductors (11) of the ribbon cable (10) and the plug pins (12) are accessible are provided in the housing (G).

2. Device according to Claim 1, characterized in that the base body (16) and the lid (17) of the housing (G) are connected to one another by means of a film hinge (18).

3. Device according to Claim 1 or 2, characterized in that the ribbon cable (10) runs with at least two bends in the separation joint (T) between the base body (16) and the lid (17) of the housing (G).

4. The device according to one of Claims 1 to 3, characterized in that the plug pins (12) have shoulders (23) on which the projections (19) of the lid (17) rest.

5. Device according to one of Claims 1 to 4, characterized in that the housing (G) is arranged in a receptacle (15) which is permanently connected to the cassette (K).

6. Device according to one of Claims 1 to 5, characterized in that the housing (G) is latched in the receptacle (15) in a sprung manner.

## Revendications

1. Dispositif de transmission de courant entre deux positions extrêmes (6, 8), entre lesquelles est disposée une ligne électrique à bande plate (10), comportant au moins deux conducteurs électriques (11), servant au raccordement électrique, passant sous forme de spires et insérée dans une cassette (C), dont la longueur est essentiellement supérieure à l'écart existant entre les deux positions extrêmes (6,8), dans lequel au moins une des deux positions extrêmes (6,8) est amovible par rapport à l'autre, dans lequel des contacts mâles (12) sont raccordés, en étant conducteurs d'électricité, aux conducteurs dénudés (11) de la ligne électrique à bande plate (10) au moins à une extrémité de ces conducteurs, qui sont disposés dans un boîtier préfabriqué (B) constitué d'une matière isolante, qui présente à son extrémité une ouverture destinée au logement de contre-contacts, dans lequel le boîtier (B) se compose d'un corps de base (16) et d'un couvercle (17), qui sont verrouillés ensemble dans la position fermée du boîtier (B) et dans lequel la ligne électrique à bande plate (10) est introduite au travers d'une fente de séparation (S) existant entre le corps de base (16) et le couvercle (17) et est coincée dans cette même fente dans la position fermée du boîtier (B), caractérisé en ce que
- des parties en saillie (19) sont ajoutées au couvercle (17), qui, étant destinées à fixer la position des contacts mâles (12) dans la position fermée du boîtier (B), adhèrent solidement à ceux-là mêmes et en ce que
- des découpures (21, 22) sont pratiquées sur le boîtier (B), au travers desquelles les points de jonction (13) entre les conducteurs (11) de la ligne électrique à bande plate (10) et les contacts mâles (12) sont accessibles ;

2. Dispositif selon la revendication 1, caractérisé en ce que le corps de base (16) et le couvercle (17) du boîtier (B) sont reliés ensemble par l'intermédiaire d'une charnière à film (18).

3. Dispositif selon la revendication 1 ou 2, caractérisé en ce que la ligne électrique à bande plate (10) passe en étant pliée au moins deux fois dans la fente de séparation (F) entre le corps de base (16) et le couvercle (17) du boîtier (B).

4. Dispositif selon l'une des revendications 1 à 3, caractérisé en ce que les contacts mâles (12) présentent des embases (23), auxquelles adhèrent les parties en saillie (19) du couvercle (17).

5. Dispositif selon l'une des revendications 1 à 4, caractérisé en ce que le boîtier (B) est disposé dans un logement (15) relié solidement avec la cassette (C).

6. Dispositif selon l'une des revendications 1 à 5, caractérisé en ce que le boîtier (B) est encliqueté par ressort dans le logement (15).
